(19) Europäisches Patentamt
European Patent Office
Office européen des brevets

(11) Publication number: 0 442 679 A1

(12) **EUROPEAN PATENT APPLICATION**

(21) Application number: 91301070.8

(22) Date of filing: 11.02.91

(51) Int. Cl.[5]: C08F 6/00, C08F 6/18

(30) Priority: 16.02.90 US 481022

(43) Date of publication of application: 21.08.91 Bulletin 91/34

(84) Designated Contracting States: BE DE DK FR GB IT NL SE

(71) Applicant: ROHM AND HAAS COMPANY
Independence Mall West
Philadelphia Pennsylvania 19105(US)

(72) Inventor: Coyle, Robert William
106 Bellview Way
Chalfont, Pennsylvania 18914(US)

(74) Representative: Angell, David Whilton et al
ROHM AND HAAS (UK) LTD. European Operations Patent Department Lennig House
2 Mason's Avenue
Croydon CR9 3NB(GB)

(54) **Purification of latex.**

(57) Polymer latex, which may be coagulated, can be treated with liquified gas or supercritical fluid in order to remove low molecular weight impurities.

EP 0 442 679 A1

This invention is concerned with the purification of polymer material which comprises polymer latex, or coagulated polymer latex, by removal of low molecular weight impurities from latex with or without coagulation to form spherical polymer particles. This is effected by treatment with high pressure solvent. Also, according to this invention, already coagulated solid polymer particles may be further purified by treatment with high pressure solvent.

Solid polymer particles may be isolated from polymer latex by several techniques known in the art. For example, spray drying or coagulation may be employed. Spray drying, however, requires large amounts of energy to vaporize the liquid component of the latex. Coagulation methods which employ salts or acids to agglomerate the polymer latex avoid the high energy costs of spray drying. Coagulation by use of salts or acids, however, requires an additional drying step to remove residual liquid from the coagulated products. Neither method provides satisfactory control over the size, shape and bulk densities of the particles produced. Also, polymeric particles produced by spray drying or coagulation generally contain impurities such as unreacted monomers, monomer impurities, solvents, oligomers, chain transfer agents, catalysts and the like. Minimizing the amount of these impurities is important since the impurities may impart undesirable taste and odor and could be hazardous when the polymer particles produced are employed in packaging for food, pharmaceuticals, cosmetics, and the like. Various methods such as chemical treatment, thermal devolatilization, and vacuum extraction have been employed to remove low molecular weight impurities from polymeric materials and latexes, often called emulsions or suspensions, which contain polymeric materials. These methods, however, do not always reduce the low molecular weight impurities of the latexes or polymeric materials to acceptably low levels. Moreover, these methods may degrade the physical properties of the polymers. A need therefore exists for latexes and polymeric particles which have substantially reduced levels of low molecular weight impurities while avoiding the aforementioned disadvantages of the prior art methods. A need also exists for the reduction of low molecular weight impurities in a latex without coagulating the polymer particles contained therein. Furthermore, a need exists for the production of coagulated polymer particles with spherical shape and a narrow particle size distribution because such coagulated material will be generally more free-flowing and will have higher bulk density. Thus, methods which would reduce low molecular weight impurity levels in latexes and in polymer particles, with or without coagulation, and would also facilitate the preparation of purified spherical particles from latexes, would be expected to fulfill previously unmet needs of the art.

The invention is directed to the purification of a latex or coagulated latex by treating the latex with high pressure solvent which may be liquified or supercritical gas. This may be conducted so as to yield a resultant latex or coagulated latex wherein polymer particles are substantially free from low molecular weight impurities such as residual mers, diluents, solvents and aqueous-borne impurities. In addition, when the invention is used to promote coagulation of the latex, resultant particles may be substantially spherical in shape and of narrow size distribution.

In accordance with the invention, impurities are removed from a polymeric latex or coagulated latex by treating the latex with high pressure solvent selected from liquified gas or supercritical gas. Suitable gases include carbon dioxide, nitrous oxide, ethane, ethylene, propylene, propane, fluorocarbons such as dichlorodifluoromethane, chlorodifluoromethane, dichlortetrafluroethane, and the like. The high pressure solvent also may be chosen so as to coagulate the latex, especially into particles with substantially uniform particle size distribution and spherical shape. Additional components can be admixed with the high pressure solvent to control the rate of coagulation of the latex and to promote removal of polar impurities from the particles so formed.

The invention can be conducted by treating a polymeric latex with the high pressure solvent to coagulate the latex into particles, which can be further treated with the high pressure solvent to reduce the level of substantially all impurities in the particles. Further, the invention can be conducted by dispersing droplets of the latex into a bath of the high pressure coagulating solvent to form coagulated spherical particles of a substantially uniform particle size distribution while simultaneously removing impurities. As an alternative, the latex may be treated to remove organic impurities without coagulating the latex. The resultant purified latex can then be used directly in purified form or can be coagulated and dried by conventional methods.

In the practice of the invention, an aqueous latex of polymer can be contacted with high pressure solvent (liquified gas or supercritical fluid) for a sufficient time to form spherical polymeric particles of a substantially uniform particle size distribution and to remove low molecular weight impurities from the particles. High pressure solvents which can be employed in the invention typically exist as a gas at ambient conditions, but can be compressed to a density of more than 0.1 gram per cubic centimeter ("g/cc") at pressures below $82188 \times 10^3$ $N/m^2$ (12,000 pounds per square inch - "psi") at temperatures below 200° C. Preferably, the fluids which are employed in the invention are gases which can be compressed to densities

of more than 0.1 g/cc at pressures below $34245 \times 10^3$ $N/m^2$ (5000 psi). Typically, gases with a critical temperature of 0° C - 100° C may be employed.

The process of the invention can be performed in several ways to form particles which have surprisingly reduced levels of impurities. In a first embodiment, hereafter referred to as "integrated coagulation extraction", high pressure solvent is employed to coagulate the latex into particles. The coagulated particles are then further treated with high pressure solvent to remove both aqueous and non-aqueous low molecular weight impurities. In a particular alternative embodiment of this approach, droplets of the latex can be sprayed into the high pressure solvent to coagulate the latex into substantially spherical particles of narrow distribution of particle size. In many cases, the latex is sufficiently purified as it coagulates and no further purification is required. In an alternative embodiment, organic contaminants contained in the latex are extracted with the high pressure solvent, but the high pressure solvent has been chosen not to cause coagulation of the latex. In this embodiment, the latex is coagulated and dried by conventional methods. In another embodiment, wet coagulated polymer, sometimes described as "wet cake" and containing from about 5% to about 60 wt.% occluded water, obtained by conventional methods of coagulation such as by acid - or salt - promoted coagulation, can be purified by treatment with the high pressure solvent.

Selection of high pressure solvents for use in the process of the invention depends on the purpose for treating the latex. For example, where the process is used to coagulate a polymeric latex whose stability is sensitive to change in pH into particles which are further treated with a high pressure solvent to remove impurities, or where the process is employed to simultaneously extract impurities while coagulating the latex into spherical particles, then the high pressure solvent is chosen so as to acidify the latex. Such high pressure solvents preferably include carbon dioxide or nitrous oxide. However, other acids which exist as liquids under ambient conditions, such as, for example, lower alkanoic acids, such as acetic acid, formic acid and the like can be employed in admixture with non-acidifying high pressure solvents such as ethylene, ethane, propylene, propane, and the like to form a high pressure solvent capable of acidifying the latex.

Where the process is used to extract low molecular weight impurities from a polymer latex without causing coagulation, the choice of high pressure solvent depends on the sensitivity of the latex stability to changes in pH. When the latex is one whose stability is insensitive to changes in pH,then the latex can be treated with high pressure solvents which are solvents for a wide range of organic impurities. Examples of these fluids include ethylene, propylene, propane, carbon dioxide, nitrous oxide, and ethane, as well as fluoro carbons containing one to four carbon atoms such as chlorotrifluoromethane, tetrafluoromethane, dichlorodifluoro-methane, dichlorotetrafluoroethane, and the like. Analogously, where the process is used to extract low molecular weight impurities from a latex whose stability is sensitive to a decrease in pH, then the latex can be treated with non-acidifying high pressure solvents which do not coagulate the latex but which are solvents for a wide range of organic impurities. Examples of these high pressure solvents include ethane, propane, ethylene, propylene, the fluorocarbons listed above, and the like.

Various polar solvents such as water, acetone, lower alkyl alcohols such as methanol, propanol, butanol and the like, may be included in the high pressure solvent to improve extraction of impurities from the latex. The polar solvents may be employed in amounts of from about 0.1 to about 20 weight percent based on the weight of the high pressure solvent. Preferably, these polar solvents are employed in amounts of from about 0.5 to about 10 weight percent based on the weight of the high pressure solvent.

The high pressure solvents can be employed over a wide range of pressures and temperatures to treat the latex to provide particles which have surprisingly low levels of impurities. Where the high pressure solvent is employed to purify a latex other than by spraying the latex into a bath of high pressure solvent, the specific temperatures and pressures employed depend on the conditions at which the particles of the latex begin to agglomerate. The temperature, however, is preferably as high as practical in order to achieve minimum latex viscosity and maximum volatility of the impurities. The high pressure solvent temperature chosen is dependent also on the specific impurities to be extracted and the thermal sensitivity of the polymer, but broadly falls in the range of from about 10° to about 200° C, and more typically in the range of from about 20° to about 100° C.

The pressures of the high pressure solvents which are employed in the invention vary in accordance with the temperatures employed so that the polymer does not dissolve into the high pressure solvent. High pressure solvent pressures in the range of from about $34245 \times 10^2$ to $82188 \times 10^3 N/m^2$ (500 to 12,000 psi) and preferably in the range of from about $34245 \times 10^2$ to $34245 \times 10^3 N/m^2$ (500 psi to 5000 psi) are employed in the process of the invention.

The time required for the high pressure solvent to extract impurities from the latex or coagulated latex depends upon the extent of impurity removal desired and the polymeric material of the latex. Substantial

removal of impurities usually can be achieved in from about 1 to about 120 minutes. Normally, from about 5 to about 60 minutes is sufficient to achieve substantial reduction of impurities.

The particles that are formed by the processes of the invention have a tighter pore structure and may have higher density relative to particles produced by conventional processes such as spray drying or salt promoted coagulation. The tighter pore structure of the particles produced by the process of the invention may enable the particles to be employed in applications which require higher packing densities.

Some fusion of the particles may occur during spray coagulation in the high pressure solvent. Some fusion is acceptable provided that the fused particles can be re-dispersed into their constituent particles when placed in subsequent use, for example into a matrix material. In general, however, the pressure, temperature and composition of the high pressure solvent is controlled to limit the extent of fusion of the particles.

The process of the invention can be employed to treat a wide variety of polymeric latexes obtained by known processes such as emulsion polymerization or suspension polymerization. Polymeric latexes which maybe treated include polymers and copolymers of lower alkylenes of from 1 to 8 carbon atoms such as ethylene, propylene, isobutylene, butene-1, butadiene, pentene-1, halo lower alkylene, such as vinyl chloride, vinylidene chloride, and the like; acrylic acid and methacrylic acid and their corresponding lower alkyl esters, such as methyl acrylate, ethyl acrylate, methyl methacrylate,and the like; vinyl esters of the formula:

$$H_2C{=}CH{-}O{-}\overset{\overset{\displaystyle O}{\|}}{C}{-}R^1$$

where $R^1$ is hydrogen, $C_1C_{10}$alkyl such as methyl, ethyl, propyl, butyl, pentyl, hexyl, heptyl, octyl, nonyl, decyl and the like, $(C_1\text{-}C_{10})$alkyl, or $(C_6\text{-}C_{10})$aryl such as phenyl, napthyl and the like, for example, vinyl formate, vinyl acetate, vinyl propionate, vinyl benzoate, and the like; monomeric vinyl ethers of the formula:

$H_2C = CH\text{-}O\text{-}R^2$

where $R^2$ is $C_1$-$C_8$ alkyl, aryl, such as phenyl, napthyl and the like, an aliphatic radical with ether linkages and which may contain substituents such as halo, carbonyl, and the like. Examples of monomeric vinyl ethers include vinylmethyl ether, vinylethyl ether, vinyl n-butyl ether, vinyl- phenyl ether, vinylcyclohexyl ether, 4-butylcyclohexyl ether, vinyl p-chloro phenylene glycol ether, and the like. Additional examples of polymeric latexes include olefinically unsaturated mononitriles of the formula:

$$\begin{array}{l} H_2C{=}C{-}CN \\ \quad\;\;\, | \\ \quad\;\;\, R^3 \end{array}$$

where $R^3$ is hydrogen, or $C_1$-$C_4$ alkyl group. Examples of such olefinically unsaturated mononitriles include acrylonitrile, methacrylonitrile, ethylacrylonitrile, proprio-acrylonitrile, and the like.

The process of the invention is especially useful for treating latexes of copolymers of methacrylate, butadiene and styrene monomer (MBS) to provide substantially spherical particles with reduced levels of impurities. MBS polymers which are particularly suited for use in the invention include methacrylate, butadiene, and styrene monomers in the ratios of from 5 to 50% methyl methacrylate, from 35 to 90% butadiene, and from 5 to 15% styrene. In addition, copolymers in which rubbery monomers such as butyl acrylate, ethyl acrylate and the like are substituted for, or employed in combination with the butadiene component of the MBS, may be treated by the process of the invention. In addition, copolymers can be prepared with or without the presence of crosslinking or graft-linking comonomers, such as divinyl benzene, ethylene glycol diacrylates or dimethacrylates, alkylmethacrylate, and the like, with no substantial effects on the utility and use of the invention.

It is believed that one skilled in the art may, using the preceding description, utilize the present invention to its full extent. The following preferred specific embodiments are, therefore, to be construed as merely illustrative, and not limitative of the disclosure in any way. In the following examples, all temperatures are set forth in degrees Celsius and all parts and percentages are by weight, unless otherwise

indicated.

Example 1 illustrates integrated coagulation extraction in which the latex polymer is coagulated in a high pressure solvent, carbon dioxide. The coagulated polymer particles are then further treated with carbon dioxide high pressure solvent to further remove impurities. Although the Examples illustrate a batch type procedure, the process also may be performed in a continuous fashion.

Carbon dioxide high pressure solvent is fed to an autoclave to reach a desired temperature and pressure, typically from 20° to 80°C, and $75339x10^2$ to$13698x10^3N/m^2$ (1100 to 2000 psig). A small amount of water is charged to the feed line between the latex feed pump and the autoclave to prevent coagulation of the latex in the feed line during start-up of the feed pump. The latex (typically diluted to 15-25% solids) is fed via the latex feed pump for a desired amount of time into the autoclave filled with a bath of carbon dioxide high pressure solvent. The polymer latex is dispersed in the form of droplets into the coagulating high pressure solvent by use of a high pressure nozzle. As the droplets of the latex are dispersed into the high pressure solvent, the particles coagulate while they are suspended in the high pressure solvent to provide free flowing, spherical particles with reduced levels of impurities. If coagulation occurs too rapidly relative to the rate of flow of latex into the high pressure solvent, coagulation may occur in the inlet line. However, if coagulation occurs too slowly, the latex droplets may settle to the bottom of the pressure vessel and coalesce into non-spherical particles. Thus, the rate of latex fed into the high pressure solvent is adjusted appropriately to the many variables of each system, discussed below.

The rate of coagulation of the droplets also can be controlled by diluting the high pressure solvent with gases such as nitrogen, air, helium, and the like. The rate of coagulation may also be controlled by diluting the latex with water. The rate of coagulation of the latex droplets in the high pressure solvent bath can also be controlled by selection of the composition, temperature and pressure of the high pressure solvent, as well as by control of the rate of feed of the latex droplets into the bath. Although there is no specific pressure which is required to effect spray coagulation, the pressure should not be so high so as to cause the polymer of the latex to dissolve into the fluid. In general, increasing the pressure of the high pressure solvent tends to decrease the particle size and to cause the particle size distribution of the particles to become less uniform. The operating conditions employed in the spray coagulation process of the invention normally include temperatures between 20-80°C,, pressures between 8,150,310 to 13013100 $N/m^2$ (1190 to 1900 psi), and latex feed rates of 16.0-82.5 g/min in a 1 liter autoclave.

In a one liter autoclave, it has been found that normally about 1 to 2 minutes is sufficient to generate 50-100 grams of coagulated particles. At the end of this short time period, the autoclave is vented and the particles recovered. The coagulated particles may then also be treated with additional carbon dioxide high pressure solvent to further reduce impurities.

The following examples illustrate this invention. However, it is to be recognized that this invention is not limited to these specific examples but that other materials can be substituted as described in the specification and claims.

Non-aqueous volatiles (NAV) are determined quantitatively by headspace gas chromatography using a dynamic thermal desorption method. The method allows for the determination of a 'total NAV' number which reflects the sum of the identified and unidentified volatile components in the analysis. The linearity of the method for a standard has been determined to be 1 to 1000 ppm weight on sample weight, designated (w/w), which reflects 0.1 to 100 ppm (w/w) in an average sample based on a sample weight of 10 mg.

The gas chromatographic instrument is calibrated on a 100 ppm (w/w) standard mix of NAV in acetone. The internal standard is 50 ppm (w/w) n-butyl acetate in acetone. Sample analysis involves weighing 5.0-15.0 mg of sample into an aluminum weighing boat. The boat is placed into a quartz tube which has been heated and purged using an Envirochem model 785 tube conditioner. The tube containing the sample is placed in the tube chamber of an Envirochem UNACON Series 810 Sample concentrator which is attached to a Hewlett-Packard 5790 Gas Chromatograph equipped with a flame ionization detector. Equipment of similar capability may be used. The internal standard solution is injected via the Envirochem injection port. When the tube chamber reaches the pre-set desorption temperature of 100°C., the program is started and the sampling valve is actuated, allowing sample vapor to flow into the analytical column. After the sampling time, the valve closes. Peak areas or heights are obtained using an appropriate integration system, and the total NAV content is summed and repoted as ppm of the polymer sample weight.

Example 1 - Purification of MBS Latex

A sample of a latex containing a three stage, rubbery stage-crosslinked, butadiene-styrene/styrene/methacrylate-acrylate polymer in water, stabilized with potassium oleate emulsifier is diluted with an equal volume of water to produce a latex containing approximately 18.5 % polymer by weight. The

diluted latex is fed through a tube with an internal diameter of 0.0794 cm (1/32 inch) at a rate of 25.3 grams per minute by means of a plunger-type pump to a stainless steel high pressure autoclave. This autoclave has a volume of 1 liter and has been charged with supercritical carbon dioxide fluid, the high pressure solvent, at a pressure of 7718823 N/m$^2$ (1127 psi) and a temperature of 33.7° C. After a total of 202 grams of the latex is pumped into the vessel, the latex feed pump is turned off and the valve in the latex inlet line is closed. The latex supplied to the vessel is agitated with an impeller at a speed of 1000 rpm while in contact with the high pressure solvent to prevent agglomeration of the coagulated particles formed through contact with the high pressure solvent, supercritical carbon dioxide.

Following coagulation of the MBS latex, an outlet port at the bottom of the autoclave is opened to allow the water released from the latex during coagulation to drain from the coagulated material. The solid particles created during coagulation are retained in the vessel by a metal screen located near the outlet port of the autoclave. When water can no longer be drained from the pressure vessel, the outlet port at the bottom of the vessel is closed, a fluid inlet line port leading to the pressure vessel is opened, and fresh high pressure solvent, carbon dioxide, is recirculated through the pressure vessel to further extract impurities from the previously coagulated particles.

The feed rate of fresh carbon dioxide high pressure solvent is 54 grams per minute (g/min), and the feed time of the fluid is 30 minutes. At the end of this period, the carbon dioxide inlet line is closed and the vessel is depressurized. The polymer particles recovered from the pressure vessel are substantially spherical in shape, are free-flowing and non-agglomerated, and have extremely low levels of impurities; dynamic headspace gas chromatographic analysis of the particles shows that the particles contain only 13 parts per million (ppm) of non-aqueous volatiles (NAV).

Examples 2-8 - Purification and Coagulation of Latex

The procedure of Example 1 is followed with the exception that dewatering of the autoclave and the carbon dioxide high pressure solvent recirculation steps are not performed, to yield a wet cake of purified coagulated polymer particles, subsequently washed and dried by conventional methods.

The data in Table 1 show the effect of operating conditions on mean particle size and the particle size distribution. The high pressure orifice diameter for these examples was 0.0794 cm (1/32 inch).

**TABLE 1**

| Sample No. | 2 | 3 | 4 | 5 | 6 | 7 | 8 |
|---|---|---|---|---|---|---|---|
| Temperature(°C) | 25.0 | 60.5 | 23.9 | 28.8 | 26.2 | 26.0 | 60.0 |
| Pressure (X10$^3$ N/m$^2$) | 8150 | 12609 | 8219 | 8287 | 13013 | 8219 | 12876 |
| Pressure (psig) | 1190 | 1841 | 1200 | 1210 | 1900 | 1200 | 1880 |
| Agitator Speed (rpm) | 540 | 1150 | 1150 | 540 | 540 | 540 | 540 |
| Emuls. Flow (g/min) | 16.5 | 18.5 | 17.0 | 19.1 | 16.9 | 32.0 | 16.0 |
| Avg. part. size (mic) | 300.0 | 165.8 | 427.4 | 281.9 | 290.0 | 214.1 | 269.7 |
| Size dist.: | | | | | | | |
| % above 500 microns | 18.4 | 0.3 | 39.4 | 9.8 | 18.2 | 0.7 | 20.0 |
| % 75-500 microns | 81.0 | 91.8 | 60.4 | 90.0 | 80.0 | 98.7 | 75.7 |
| % below 75 microns | 0.6 | 7.9 | 0.2 | 0.2 | 1.8 | 0.6 | 4.3 |

Examples 9-10 - Orifice Diameter Effect on Particle Size

Examples 9-10 illustrate the effect of the orifice diameter of the tube employed to supply the latex to the pressure vessel. Examples 9-10 are performed in accordance with the procedure of examples 2-8 with

the exception that the tube through which the latex is supplied to the pressure vessel has an internal diameter of 0.15875 cm (1/16 inch) rather than 0.0794 cm (1/32 inch) diameter as used in examples 2-8 (Table 1). The resulting particle size distribution is also shown in Table 2.

**TABLE 2**

| Sample No. | 9 | 10 |
|---|---|---|
| Temperature (°C) | 25.0 | 25.0 |
| Pressure N/m$^2$ (psig) | 8218800 (1200) | 8287290 (1210) |
| Agitator Speed (rpm) | 540 | 540 |
| Emulsion Flowrate (g/min) | 19.0 | 82.5 |
| Orifice Diameter cm (in) | 0.16 (1/16) | 0.16 (1/16) |
| Wt. avg. particle size (micron) | 971.9 | 721.1 |
| Size dist.: | | |
| % above 500 microns | 57.3 | 57.3 |
| %75-500 microns | 40.7 | 43.7 |
| % below 75 microns | 2.0 | 2.3 |

Examples 11-25 - Purification of Coagulated Latex

Examples 11-25 illustrate the effect of varying the operating conditions on the reduction in the level of impurities of an MBS co-polymer wet cake. Thus, a latex containing an MBS resin of a lightly cross-linked butadiene-styrene rubber core with acrylic and styrene outer shell was converted to wet cake by conventional HC1-promoted coagulation. The wet cake contained approximately 33 weight % water and a concentration of 1136 parts per million of non-aqueous volatile contaminants. The operating conditions employed to remove impurities from the wet cake, and the results of the purification treatment, are given in Table 3.

TABLE 3

| Example | Temp[1] | $CO_2$ Pressure [2] | Time[3] | $CO_2$ Flowrate[4] | Sample Amount[5] | Final $H_2O$ Conc.[6] | NAV[7] |
|---|---|---|---|---|---|---|---|
| 11 | 80 | A | .25 | 11.5 | 27.3 | 18.6 | 574 |
| 12 | 60 | A | .75 | 14.7 | 10.2 | 0.1 | 51 |
| 13 | 40.2 | B | 1.0 | 8.5 | 25.8 | 26.4 | 110 |
| 14 | 70 | A | 1.0 | 14.0 | 27.4 | 17.2 | 54 |
| 15 | 60 | A | 1.0 | 14.5 | 13.6 | 0.5 | 47 |
| 16 | 60 | A | 1.0 | 14.5 | 13.6 | 0.4 | 17 |
| 17 | 60 | A | 1.0 | 14.8 | 13.6 | 0.7 | 101 |
| 18 | 60 | A | 1.0 | 15.1 | 13.6 | 0.5 | 26 |
| 19 | 80 | A | 1.5 | 13.4 | 27.2 | 0.0 | 24 |
| 20 | 70.0 | A | 1.5 | 13.5 | 27.2 | 5.7 | 38 |
| 21 | 41.8 | E | 1.9 | 13.8 | 30.2 | 15.9 | 10 |
| 22 | 41.5 | C | 2.0 | 3.6 | 25.2 | 19.4 | 36 |
| 23 | 45.0 | C | 2.0 | 3.7 | 30.1 | 22.0 | 8 |
| 24 | 48.8 | A | 2.0 | 3.9 | 30.3 | 18.8 | 143 |
| 25 | 42.4 | D | 2.0 | 5.1 | 30.1 | 20.9 | 22 |

NOTES

1. Degrees Centigrade
2. A= 13698000 N/$m^2$(2000 psi)
   B= 13725396 N/$m^2$(2004 psi)
   C= 13732245 N/$m^2$(2005 psi)
   D= 13752792 N/$m^2$(2008 psi)
3. Hours
4. Grams per minute
5. Grams
6. Weight percent
7. Non-aqueous volatile impurities, parts per million

Example 26 - Purification of a Latex without Coagulation

In a further example of the invention, a fluid which acidifies the latex is employed to extract impurities without coagulating the latex. In this example, carbon dioxide high pressure solvent is employed to treat a latex that has been stabilized with a soap which yields latex stability over a range of pH values, including acidic environments down to pH 2, especially found not responsive to fluid carbon dioxide under pressure in the supercritical ranges of temperature and pressure. This example is described below.

A latex of an all-acrylic, two stage 88 BA/12 MMA core/shell polymer (stabilized with 1.0 wt. % sodium lauryl sulfate emulsifier solids on polymer) is mixed with added methyl methacrylate monomer and butyl acrylate monomer at levels sufficient to bring the final latex concentration of each monomer to 1 wt.%. A total of 50 grams of the resulting mixture was placed in the autoclave (described in previous examples) and the autoclave was pressurized to 1369800 N/$m^2$ (2000 psig) with the high pressure solvent, carbon dioxide. The temperature of the vessel was maintained at 40 °C and the carbon dioxide high pressure solvent was allowed to pass through the vessel at a rate of 10.0 grams per minute. After a period of 0.5 hour, the carbon dioxide inlet line was closed, and the vessel was de-pressurized. The uncoagulated latex in the vessel was removed from the vessel and analyzed by gas-liquid chromatography. It was found to have a concentration of methyl methacrylate monomer reduced to less than 100 ppm and a concentration of butyl acrylate

monomer reduced to approximately 200 ppm.

The polymer particles and latexes produced by the processes of the invention have substantially reduced levels of impurities. The polymer particles may be employed directly to form products. Alternatively, the polymer particles may be further treated by conventional devolatilization techniques such as spray drying, flash drying, fluid bed drying and the like to further reduce the levels of impurities in the particles. The particles produced by the processes of this invention may be readily employed to provide a variety of products by well known methods such as compression molding, extruding, and the like. Such products include, for example, beverage containers, automotive parts, vinyl siding, packaging and the like.

While the invention has been described and exemplified in great detail, alternative embodiments, alterations and improvements should become apparent without departure from the spirit and scope of the invention.

**Claims**

1. A method for purifying polymeric material selected from latex or coagulated latex which comprises treating the polymeric material with high pressure solvent selected from liquified gas or supercritical fluid.

2. A method as claimed in claim 1 wherein the high pressure solvent has the capability to coagulate the latex.

3. A method as claimed in claim 1 or 2 wherein the treatment is carried out by dispersing droplets of the latex into the high pressure solvent so as to form spherical particles of coagulated polymer which preferably are of substantially uniform and narrow particle size distribution.

4. A method as claimed in claim 3 wherein the high pressure solvent is mixed with other components prior to or during the dispersing of the latex, preferably with gas, such as nitrogen, air or helium, or with ($C_1$-$C_4$)-alkanol such as methanol, ethanol, n- or iso-propyl alcohol, or n-, secondary-, or tertiary-butanol.

5. A method as claimed in any preceding claim wherein the high pressure solvent comprises carbon dioxide, nitrous oxide, ethylene, ethane, propylene, propane and/or fluorocarbon containing up to 4 carbon atoms.

6. A method as claimed in any preceding claim wherein the latex has a polymer solids content of 5 to 30 weight percent.

7. A method as claimed in claim 3 wherein the purification and coagulation treatment includes controlling the treating pressure up to $82188x10^3$ $N/m^2$ (12,000 pounds per square inch) and the temperature from 10 to 200 degrees Celsius.

8. A method as claimed in claim 1 wherein the polymeric material is a latex and the purification is accomplished without coagulating the latex.

9. A method as claimed in any of Claims 1 to 7 wherein the polymeric material is treated with a high pressure solvent to form coagulated particles which are further treated with high pressure solvent.

10. A method as claimed in claim 9 wherein the supercritical fluid comprises carbon dioxide or nitrous oxide.

11. A method as claimed in any preceding claim wherein the polymeric material is selected from methacrylate/butadiene/styrene copolymer (especially 5-50% methyl methacrylate, 35-90% butadiene, or 5-15% styrene copolymer), acrylonitrile/butadiene/styrene copolymers, acrylate copolymers, methacrylate copolymers, or vinyl acetate polymers.

European Patent Office

# EUROPEAN SEARCH REPORT

Application Number

**EP 91 30 1070**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 417 529 (ANIC)<br>* Claims 1-2 *<br>- - - | 1,11 | C 08 F 6/00<br>C 08 F 6/18 |
| X | EP-A-0 281 464 (RHONE-POULENC)<br>* Claims 12 *<br>- - - | 1 | |
| X | DE-A-3 323 940 (HOECHST)<br>* Claims 1,2 *<br>- - - | 1 | |
| P,X | EP-A-0 374 879 (TOYO ENGINEERING CORP.)<br>* Claims 1,4-6,8 *<br>- - - - - | 1,5-8,11 | |
| | | | **TECHNICAL FIELDS SEARCHED (Int. Cl.5)** |
| | | | C 08 F<br>C 08 C |

The present search report has been drawn up for all claims

| Place of search | Date of completion of search | Examiner |
|---|---|---|
| The Hague | 21 May 91 | VAN HUMBEECK F.W.C. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document